# EUROPEAN PATENT APPLICATION

(11) **EP 4 796 580 A1**
(43) Date of publication of application: **26.08.2026**
(21) Application number: 25159684.7
(22) Date of filing: 24.02.2025
(51) Int. Cl.: C08J 11/24

(54) **PROCESS FOR PRODUCING RECYCLED PET MONOMERS AND/OR OLIGOMERS SUITABLE FOR USE IN RECYCLED PET BOTTLE, SHEET, TEXTILE AND ENGINEERING APPLICATIONS**

(71) Applicant: Köksan Pet ve Plastik Ambalaj Sanayi ve Ticaret Anonim Sirketi, 27600 Sehitkamil/Gaziantep (TR)
(72) Inventor: Kökoglu, Muhammet Murat, 27600 Gaziantep (TR)
(74) Representative: Mutlu, Aydin

(57) **Abstract**

The present invention provides a process for producing recycled PET monomers and/or oligomers from PET wastes comprising basically depolymerization of PET flakes in a glycolysis reactor in the presence of a monomer base and filtration of obtained monomers and/or oligomers. The monomers and/or oligomers obtained herein can subsequently be used to produce 100% rPET resin which is suitable for manufacturing PET bottles, containers and fibres.

## Description

### Technical Field of the Invention

The present invention relates to a process for producing recycled PET monomers and/or oligomers from PET wastes. The process according to the invention enables obtaining PET monomers and/or oligomers which are suitable for use in PET resin production both for food, water, oil and beverage packaging applications, and for textile applications.

### Background of the Invention

The reuse of substances used in daily life by way of recycling is of great importance in terms of preserving the natural resources for the future generations and protecting the ecological balance of the world. In general, recycling can be defined as the process of reutilizing the wastes having the possibility of recycling in the production processes, by converting them to secondary raw materials through various physical and/or chemical processes.

There are many areas where recycling can be made. Among these, the most known and used one is the recycling of the plastics. Plastics are generally produced using petroleum-derived chemicals. When they are not recycled, plastics do not only cause visual pollution, but also harm the surrounding organisms and soil. PET, which belongs to the class of plastics that can be reshaped by heat and pressure (i.e. thermoplastics), is one of the most suitable plastic materials for recycling. This applies especially for chemical recycling, which is a safe process for PET recycling. The material does not lose its characteristics and value through chemical recovery and repolymerization of waste. There are different methods which are being used for the chemical recovery of PET wastes. One of these methods is the glycolysis method in which the PET is separated up to its monomers and oligomers. PET wastes are recycled through introducing the monomers and oligomers obtained from the PET waste by glycolysis method into the polycondensation reaction.

In recent years, recycling of polyester containers such as PET bottles has gained importance and official authorities currently foster collection and recycling for saving resources and protecting environment. As put forward by life cycle analyzes, PET bottles -which make 30% of the PET-based materials-, can be recycled easily and effectively. There are various techniques for recycling polyesters currently used in the relevant art. However, the quality requirements for most recycled PET applications are highly demanding. Especially for the product applications that may come into contact with food, very high degree of purity is required. The acceptable level of particulate contaminants for many end-products is less than 100 parts per million (or 0.0001% by weight). Colouration is also an important concern which affect transparency of the final product. Besides, it is highly desirable to increase percentage of recycled PET (rPET) resin in the overall composition of the final products/moulded articles without causing colouration and colour shades.

WO 2020/149798 A1 discloses a PET recycling process by using a glycolysis method comprising mainly the steps of pre-treatment of the PET flakes, depolymerization of the PET flakes in the extruder, treatment with ethylene glycol and obtaining monomers, filtration of the monomers, and obtaining the recycled resin with the monomers obtained in the process. The process described in this application is suitable for producing high quality rPET resin for mixing with non-recycled resin and obtaining eventually the final moulded products. There is, however, a longstanding demand for producing recycled products and moulded articles that are manufactured by using a resin composition constituted of recycled PET by higher percentage (i.e. 100% of rPET). Furthermore, it is also desirable that PET recycling processes are made safer, for example by way of providing processes that does not involve the use of an extruder.

The present processes available in the art do not allow production of resin and final products by using 100% of rPET without compromising in terms of quality and colouration. It is also noted that present processes do not allow obtaining monomers and/or oligomers which are suitable for use in product applications that may come into contact with food. The present invention eliminates and alleviates the foregoing drawbacks by a process according to claim 1.

### Brief Description of the Invention

The present invention relates to a process for producing recycled PET monomers and/or oligomers from PET wastes comprising the steps of:
a. providing a PET monomer base in a glycolysis reactor,
b. providing PET flakes from the PET wastes,
c. feeding PET flakes and ethylene glycol to the glycolysis reactor,
d. depolymerization of the PET flakes by treatment with ethylene glycol in the glycolysis reactor at a temperature of 200 °C or less, more preferably 180-197 °C, and most preferably 190-195 °C,
e. subjecting obtained melt to filtration at a value less than 5 µm, and
f. obtaining recycled PET monomers and/or oligomers.

It is preferable to provide a pre-treatment procedure for washing, drying and sorting of the PET flakes before the depolymerization.

The viscosity value of the monomers and/or oligomers obtained by the process can be adjusted to a value ranging from 0,84 dl/g to 0,05 dl/g, more preferably to a value ranging from 0,25 dl/g to 0,05 dl/g, and most preferably to a value ranging from 0,12 dl/g to 0,05 dl/g. The filtration step (e) can be realized at a value less than 3 µm.

The filtration step (e) according to the process of the invention can be performed with a leaf filter or with a microfiltration unit. Alternatively, filtration can be carried out by using sand and calcined diatomaceous earth. The objective in any case is to obtain monomers/oligomers having particle size of 5 µm or less.

The temperature of the internal content of the glycolysis reactor can be arranged as explained above, i.e. below boiling point of ethylene glycol, thereby thermal degradation is alleviated or eliminated in the glycolysis reaction. This ensures a true transparency of bottle-grade PET resin with desired parameters such as L value (brightness), A value (red-green tone), and B value (yellow-blue tone).

It is noted by the inventor that conventional glycolysis processes are generally carried out at high temperatures at around 230-250 °C which causes undesirably diethylene glycol (DEG) formation in the resin. Therefore, a further improvement is revealed with the process of the instant invention in elimination of DEG formation which remains generally in the same level as the PET flakes in the eventual resin product, by virtue of lower temperatures under boiling point of ethylene glycol.

The depolymerization step (c) is preferably carried out as a continuous depolymerization process.

Preferably, monomers and/or oligomers obtained in step (f) are further filtered with a filtration system having a mesh size of 20 µm before being fed to the monomer storage tanks.

The process of the invention preferably further comprises the step of polycondensation of the monomers and/or oligomers obtained in step (f) in order to obtain a recycled PET resin. Also preferably, said recycled PET resin can be moulded to produce a moulded article, wherein 100% of PET composition of the moulded article is sourced by the recycled PET resin.

Preferably, monomers and/or oligomers obtained by the process of the invention have an ash content which is lower than 250 ppm, for example in the range of 200-225 ppm.

The depolymerization step of the process of the invention can preferably be continued and completed in a second glycolysis reactor.

### Detailed Description of the Invention

The present invention relates to a novel, cost effective and efficient process for producing recycled PET monomers and/or oligomers from PET wastes with a high conversion rate even in high capacity production rates as high as, for instance 200-400 tons/day, more preferably about 300 tons/day. The resin obtained from such monomers/oligomers can be suitably used for producing final products/moulded articles that may come into contact with food. Hence, the method according to the present invention provides monomer and/or oligomer which can be used in production of bottle grade and food grade recycled PET.

The chemical depolymerization of PET can be realized by way of glycolysis method. However, glycolysis processes currently known and used in the relevant field have the drawback of not providing high quality monomers/oligomers that can be used in the production of moulded articles which are manufactured with 100% recycled PET, without the need for including virgin PET in the composition of the moulded articles. Another drawback is that, glycolysis processes known in the art involves the reaction of PET wastes with ethylene glycol in the presence of a basic catalyst. The presence of such catalyst further increases the cost of the process, and causes metallic impurities in obtained monomers and oligomers. Furthermore, current glycolysis processes are inefficient in terms of providing monomers and/or oligomers which can be used in PET resin synthesis which is in a suitable grade for contact with food, since the level of filtration is inadequate for obtaining food/bottle grade PET. Lastly, the commonly used extruder process is unsafe due to the possibility to catch fire. Extruder process also has undesirably high power consumption compared to glycolysis method and many extruders are required for achieving a high capacity of recycling.

Objects of the present invention lie on the elimination of the foregoing drawbacks and providing a cost effective and efficient process for producing recycled PET monomer and/or oligomer which may be used to produce PET resin suitable to be used for manufacturing high-grade PET end-products, for example PET fibres, bottles and containers.

In an aspect, the present invention provides a process for producing recycled PET monomers and/or oligomers from PET wastes comprising the steps of:
a. providing a PET monomer base in a glycolysis reactor,
b. providing PET flakes from the PET wastes,
c. feeding PET flakes and ethylene glycol to the glycolysis reactor,
d. depolymerization of the PET flakes by treatment with ethylene glycol in the glycolysis reactor at a temperature of 200 °C or less, more preferably 180-197 °C, and most preferably 190-195 °C,
e. subjecting obtained melt to filtration at a value less than 5 µm, and
f. obtaining recycled PET monomers and/or oligomers.

The monomers and/or oligomers obtained by the process of the present invention are suitable for use in bottle, sheet, fibre, textile and other engineering applications upon polycondensation.

The "glycolysis reactor" as used herein refers to a reactor having a suitable receptacle possibly equipped with agitation means as well as heating/cooling means such as a jacket. It doesn't include an extruder.

The monomer base according to the invention can be produced by virgin raw materials. For example, monomer base can be obtained as a product of dimethyl terephthalate process, which involves the reaction of dimethyl terephthalate with ethylene glycol in the presence of a basic catalyst. In another example, monomer base can be obtained as a product of terephthalic acid process, i.e. esterification of terephthalic acid with ethylene glycol. These embodiments can be realized by providing a polymerisation plant available next to recycled PET (rPET) monomer production line. Alternatively, the monomer base can be obtained from PET flake as a product of glycolysis reaction. In this embodiment, the mother batch of monomer is produced with the depolymerization of flake with large quantity of glycol, preferably ethylene glycol.

The depolymerization reaction according to the invention takes place in a glycolysis reactor, instead of melting of flakes in an extruder. A high capacity production such as 300 tons/day in a single stream as nameplate capacity is made possible with glycolysis reactor according to the invention. A rapid glycolysis reaction is ensured in the glycolysis reactor, by keeping the monomer base inside the reactor prior to addition of PET flakes and ethylene glycol. In addition to expediting the reaction, the use of monomer base also has the advantages of facilitating the heat requirement and glycol requirement for the rapid glycolysis reaction. This means that the reaction is carried out at a lower temperature compared to conventional glycolysis reactions. Furthermore, by virtue of employment of a monomer base, glycol to PET flake ratio can be kept at minimum. Molar ratio of glycol to PET flake according to the invention is 1:1.05 to 1:1.50, preferably 1:1.10 to 1:1.25. Molar ratio of glycol to PET flake according to the invention is most preferably 1:1.13. Herein, said glycol is preferably ethylene glycol. Low molar ratio of glycol to PET flake and lower reaction temperature under 200 °C, for example around 180-197 °C enable to achieve better colour characteristics and lower diethylene glycol (DEG) formation, which are very important to obtain bottle grade and food grade PET resin. Present inventors also surprisingly found out that the use of monomer base in the process of the invention allows for up to 100% conversion rate from PET to monomer.

Notably, the depolimerization reaction above provides the desired conversion rates and efficiency even without a catalyst Thus, the depolimerization procedure carried out in the glycolysis reactor is preferably devoid of a catalyst. This not only reduces the costs but also decreases the residual undesired ashes in the final resin.

The glycolysis reactor may be provided with monomer base from CP (Continuous Polycondensation) line. The monomer base is kept under agitation. For example, 40-ton monomer is kept under these conditions in the glycolysis reactor before the PET flakes and ethylene glycol are fed into the glycolysis reactor.

The temperature of the glycolysis reactor during the depolymerization step is adjusted to a temperature of 200 °C or less, more preferably 180-197 °C, and most preferably 190-195 °C.

PET flakes can initially be treated with washing, drying and sorting steps in order to remove dirtiness and impurities such as metals and undesired polymers (i.e. PP, PVC, PE etc.). The PET flakes according to the invention can be prepared by shredding of PET articles such as bottles and containers collected after their usage. Since the quality requirements for most recycled PET applications are highly demanding, sorting of the PET flakes based on colour is particularly preferable. Alternatively, the colour sorting may be carried out before the shredding step based on the PET articles used as the raw material.

The temperature of the PET flakes before being fed to the glycolysis reactor is preferably between 25 °C and 35 °C, wherein the temperature of the glycol before being fed to the glycolysis reactor is preferably between 185-190 °C.

In an embodiment, PET flakes may initially be treated with hot glycol, preferably with hot ethylene glycol, before being fed to glycolysis reactor. The pre-treated PET flakes + hot glycol with molar ratio of 1:1.05 to 1:1.50, preferably 1:1.10 to 1:1.25, most preferably 1:1.13 is fed to the glycolysis reactor. Preferably, a specially designed agitator brings the PET flakes + hot glycol together with the monomer base and the glycolysis reaction is performed. As explained hereinabove, the presence of the monomer base and the specific molar ratio of glycol to PET flake as defined enable rapid depolymerization. Taking monomer from CP is one of the options when CP line is under operation, and it is taken only for once to start the process. If CP lines are not running, then the monomer base is prepared with flake and glycol by glycolysis reaction. The dwell time in the glycolysis reactor is adjusted to 1-2 hours, preferably to 1.5 hours.

In a further embodiment, depolymerization reaction which is started in the glycolysis reactor is completed in a second glycolysis reactor, also named herein as post-glycolysis reactor or post-depolymerization reactor. In this embodiment, ethylene glycol and the PET flakes are preferably introduced to the glycolysis reactor which is already containing monomer base and then the content of the first glycolysis reactor is transferred to the second glycolysis reactor for completing the depolymerization reaction as quickly as possible. In addition to expediting the process, the second glycolysis reactor also ensures 100% conversion of PET flakes to monomer and/or oligomer.

The depolymerization step can also be preferably carried out as a Continuous Depolymerization Process. The continuous process ensure higher capacity without time consuming interruptions and costly heating/cooling cycles.

The recycled PET monomers and/or oligomers obtained by the process according to the invention preferably have lower than 250 ppm ash content, ensuring the metallic impurities are within the acceptable limit. More preferably, the ash content is in the range of 200-225 ppm. Such low ash content and resulting high purity is achieved by virtue of a process that advantageously does not involve any catalyst.

The filtration of the melt obtained in step (d) is preferably realized with a specially designed coated leaf filter or any other type of filter having a mesh size with 5 µm or less. 5 µm mesh size leaf filter is suitable for directly using with all types of polyester polymerization/depolymerization plants and applications. Alternatively, this step can be accomplished by treating the melt in preferably lowered viscosity with ethylene glycol in controlled ratios in the glycolysis reactor and/or in the post-glycolysis reactor and then pumping the melt into a filtration reactor or into a microfiltration unit wherein the melt is subjected to filtration at a value of 5 µm or less. Preferred filtration size is 3 µm or less, such as 2-3 µm.

Filtration reactor or microfiltration unit can be heated by a heat transfer oil. By way of microfiltration, all impurities greater than the predetermined size are filtered and removed from the monomers. Microfiltration according to the invention, realized either with a leaf filter or with a filtration reactor/a microfiltration unit provides a complete depolymerization process to the monomer level, which is suitable for providing the high-grade monomer required for PET resin production which can be in contact with food. Microfiltration also helps to improve colour characteristics of the resin such that undesired colourations or colour shades are alleviated. In a further embodiment, the filtration is realized at a value less than 3 µm, i.e. with a leaf filter or a filtration system with a mesh size of 3 µm.

Filtration according to the invention further ensures monomers and/or oligomers obtained by the process have a controlled intrinsic viscosity, i.e. up to 0.05dl/g. In an embodiment, the intrinsic viscosity value of the monomers and/or oligomers obtained by the process of the invention can be adjusted to a value ranging from 0,84 dl/g to 0,05 dl/g, more preferably to a value ranging from 0,25 dl/g to 0,05 dl/g, and most preferably to a value ranging from 0,12 dl/g to 0,05 dl/g. These intrinsic viscosity values allows for obtaining monomers and/or oligomers suitable for bottle, sheet, fibre and film grade applications. Intrinsic viscosity herein is measured according to ASTM D4603-03.

Preferably, monomers and/or oligomers obtained by the process of the invention are further filtered with a filtration system having a mesh size of 20 µm before being fed to the monomer storage tanks. This step ensures that the 3 µm filter used is not by-passed and provides further purification.

The monomers and/or oligomers obtained by the process of the present invention is preferably further checked for colouration and other impurities. Said monomers and/or oligomers are cooled down to a temperature of about 180 °C by indirect cooling method by HTM (Heat Transfer Media) cooling circulation and kept at the same temperature with cooling and heating in HTM.

The process of the invention preferably further comprises the step of polycondensation of the monomers and/or oligomers obtained in step (f) in order to obtain a recycled PET resin. In order to produce the recycled PET resin according to this further embodiment of the invention, monomers and/or oligomers obtained by the process of the invention are treated with a polycondensation procedure whereby the monomers and oligomers are subjected to esterification (post esterification), polymerization and optionally crystallization. In preferred embodiments, the procedure at this stage involves a Continuous Polymerization Process (CPP) as conventionally known in the art Said process may include usage of a finisher reactor in which the polycondensation reaction is accomplished. Mono ethylene glycol formed in this stage can be removed. The melt from the reactor is advantageously filtered with a filtration system having mesh size between 20 µm and 60 µm, and more preferably about 40 µm. Consequently, recycled PET resin with desired intrinsic viscosity is obtained.

Also preferably, said recycled PET resin can be moulded to produce a moulded article, wherein 100% of PET composition of the moulded article is sourced by the recycled PET resin. It was surprisingly noted by the present inventors that obtained PET resin can advantageously be used in the manufacturing of moulded articles that such moulded articles can be produced with %100 of rPET resin without the need for incorporation of virgin PET resin. Said moulded articles, especially the bottles, exhibited no or minimum level of colourations and colour shades which has not been achieved before with conventional processes.

The process according to the present invention is advantageous in that it achieves a high conversion rate from PET to monomer without the need for a catalyst. This is made possible with the use of specially designed process explained above. Furthermore, present invention enables obtaining monomers/oligomers with particle size of 5 µm or less, which is favourable for food contactable PET resin application.

## Claims

1. A process for producing recycled PET monomers and/or oligomers from PET wastes comprising the steps of:
a. providing a PET monomer base in a glycolysis reactor,
b. providing PET flakes from the PET wastes,
c. feeding PET flakes and ethylene glycol to the glycolysis reactor,
d. depolymerization of the PET flakes by treatment with ethylene glycol in the glycolysis reactor at a temperature of 200 °C or less,
e. subjecting obtained melt to filtration at a value less than 5 µm, and
f. obtaining recycled PET monomers and/or oligomers.

2. The process according to claim 1, wherein the process further comprises a pre-treatment procedure for washing, drying and sorting of the PET flakes.

3. The process according to claim 1, wherein the intrinsic viscosity of the monomers and/or oligomers obtained in step (f) is adjusted to a value ranging from 0,84 dl/g to 0,05 dl/g.

4. The process according to claim 1, wherein the melt in the filtration step (e) is subjected to filtration at a value less than 5 µm.

5. The process according to claim 1 or claim 4, wherein the melt in the filtration step (e) is subjected to filtration by a leaf filter.

6. The process according to claim 1 or claim 4, wherein the melt in the filtration step (e) is subjected to filtration by a microfiltration unit

7. The process according to claim 1, wherein the temperature of the glycolysis reactor during the depolymerization step (d) is adjusted to the range of 180-197 °C, and more preferably 190-195 °C.

8. The process according to claim 1, wherein the depolymerization step (d) is carried out as a continuous depolymerization process.

9. The process according to claim 1, wherein the monomers and/or oligomers obtained in step (f) are further filtered with a filtration system having a mesh size of 20 µm before being fed to the monomer storage tanks.

10. The process according to claim 1, wherein the process further comprises the step of polycondensation of the monomers and/or oligomers obtained in step (f) to obtain PET product

11. The process according to claim 10, wherein the process further comprises moulding of the recycled PET resin to produce a moulded article, wherein 100% of PET composition of the moulded article is sourced by the recycled PET resin.

12. The process according to claim 1, wherein the obtained monomers and/or oligomers have an ash content which is lower than 250 ppm.

13. The process according to claim 1, wherein the depolymerization step (d) is completed in a second glycolysis reactor.
